# EUROPEAN PATENT SPECIFICATION

(11) **EP 4 269 831 B1**
(45) Date of publication and mention of the grant of the patent: **01.05.2024**
(21) Application number: 22204290.5
(22) Date of filing: 28.10.2022
(51) Int. Cl.: F16D 65/097

(54) **BRAKE CALIPER ASSEMBLY, BRAKE AND VEHICLE**
BREMSSATTELANORDNUNG, BREMSE UND FAHRZEUG
ENSEMBLE ÉTRIER DE FREIN, FREIN ET VÉHICULE

(30) Priority: 29.04.2022 CN 202221033764 U
(43) Date of publication of application: 01.11.2023
(73) Proprietor: Nio Technology (Anhui) Co., Ltd, Hefei City, Anhui 230601 (CN)
(72) Inventor: WANG, Rui, Jiading Shanghai 201805 (CN); MA, Yiming, Jiading Shanghai 201805 (CN); SHI, Yongxiang, Jiading Shanghai 201805 (CN)
(74) Representative: Vossius & Partner Patentanwälte Rechtsanwälte mbB

(56) References cited:
- CN-U- 215 980 559
- CN-U- 216 045 124
- US-A1- 2015 122 602
- US-A1- 2017 037 916
- US-A1- 2021 254 679
- US-A1- 2022 056 970
- US-A1- 2022 065 312

## Description

### Technical Field

The invention relates to the technical field of vehicles, and particularly provides a brake caliper assembly, a brake, and a vehicle.

### Background Art

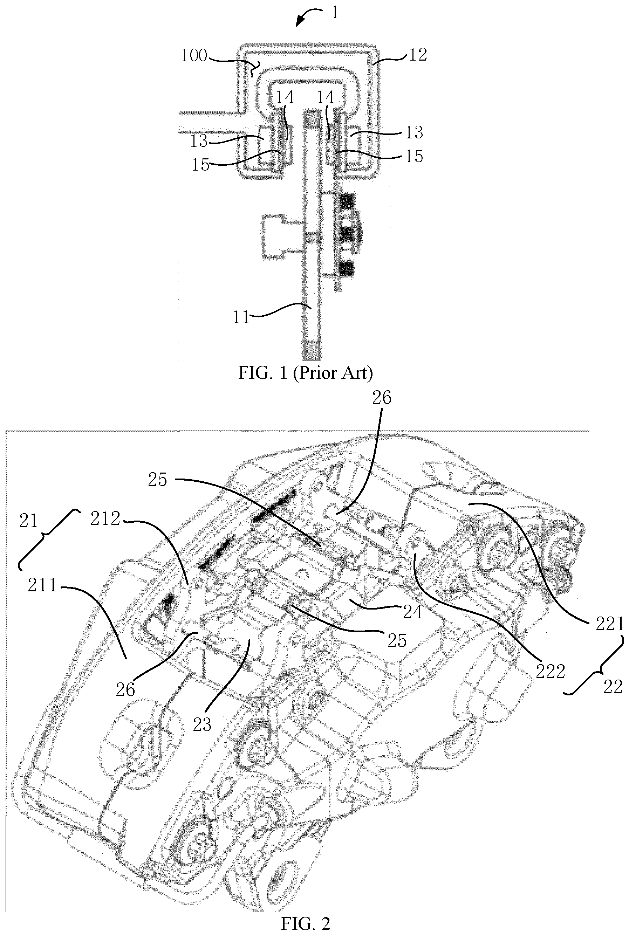

Brakes are typically capable of braking to-be-braked components, for example, vehicles often have brakes for preventing wheel rotation to realize braking (deceleration or stop) of the vehicles. As shown in Fig. 1, Fig. 1 illustrates a schematic diagram of a brake 1, an existing brake of a vehicle in an inoperative state. The brake 1 comprises a brake disc 11, a brake caliper 12 having a cavity, two pistons 13, two friction pads 14, two friction pad mounting bases 15 and a leaf spring (not shown in the figure). The brake disc 11 is fixedly connected to a wheel of the vehicle. The brake caliper 12 is in an inverted U shape. Two side portions of the brake caliper 12 are located on both sides of the brake disc 11. The two pistons 13 are respectively slidably connected to one side, close to the brake disc 11, of the two side portions of the brake caliper 12, and at least a part of each piston 13 is accommodated in the cavity of the brake caliper 12. The two friction pads 14 are fixedly mounted on one side, close to the brake disc 11, of the two pistons 13 through the two friction pad mounting bases 15 respectively. The leaf spring is fixedly connected to the brake caliper 12 and is located between the two friction pad mounting bases 15. Two ends of the leaf spring respectively abut on one side, close to the brake disc 11, of the two friction pad mounting bases 15.

The cavity of the brake caliper 12 is filled with a brake fluid from a vehicle hydraulic system. When a driver depresses a brake pedal, the hydraulic system acts to increase a brake fluid pressure in the cavity of the brake caliper 12, so that the two pistons 13 move toward the brake disc 11 until the two friction pads 14 abut against the brake disc 11, and the brake disc 11 rotating with the wheel slows down or even stops under the friction action of the friction pads 14 so as to realize braking of the wheel. During braking, the two friction pads 14 gradually approach the brake disc 11, and the leaf spring is compressed. When the driver fully releases the brake pedal, the brake fluid pressure in the cavity of the brake caliper 12 is reduced to allow the friction pads 14 to move away from the brake disc 11. In this process, the leaf spring restores the friction pads 14 to a position in the inoperative state as shown in Fig. 1 through the action of its elastic restoring force. For example, Chinese utility model CN 215 980 559 U discloses such a brake caliper assembly with a leaf spring which has a spring-back portion contacting a friction disc.

During repeated braking, the friction pads 14 will become thinner due to wear. However, the maximum deflection that the existing leaf spring can bear is relatively short. If the friction pads 14 are not replaced in time after being worn, it is very likely that an actual compression of the leaf spring exceeds the maximum deflection it can bear during braking, resulting in a plastic deformation of the leaf spring, a difficulty in restoring to its original state, and a failure in playing the role of restoring the friction pads 14. This will lead to incomplete separation of the friction pads 14 from the brake disc 11, shorten the service life of the brake disc 11, increase the dragging force of the vehicle in the inoperative state, and increase fuel consumption. In view of the problem that the maximum deflection that the leaf spring can bear is limited, some skilled in the art proposes to reduce the thickness of the leaf spring to increase the maximum deflection that it can bear. However, this method also weakens an elastic restoring force of the leaf spring while increasing the maximum deflection. Therefore, how to increase the maximum deflection that the leaf spring can bear on the premise of ensuring the elastic restoring force of the leaf spring has become an urgent problem to be solved.

Therefore, a brake caliper assembly, a brake, and a vehicle are needed in the field to solve the above problems.

### Summary of the Invention

The invention is defined by the features of the independent claim. Preferred embodiments are defined in the dependent claims.

The invention is intended to solve the above technical problems, that is, how to increase the maximum deflection that a leaf spring can bear on the premise of ensuring an elastic restoring force of the leaf spring.

In a first aspect, the invention provides a brake caliper assembly, comprising a first brake caliper, a second brake caliper, a drive assembly, and an leaf spring, the first brake caliper and the second brake caliper symmetrically arranged on either side of a to-be-braked member, and the drive assembly being arranged to enable the first brake caliper and/or the second brake caliper to abut against the to-be-braked member so as to brake the to-be-braked member; the leaf spring is arranged between the first brake caliper and the second brake caliper and comprises an elastic structure, the elastic structure comprises a bending portion, an extending portion, an outward-expanding portion, and an abutting portion that are connected in sequence, the outward-extending portion extends from the extending portion to the outside of the leaf spring, the bending portion is bent inwards, and the abutting portion abuts on the first brake caliper and/or the second brake caliper.

In the case of adopting the above technical solution, when the first brake caliper and the second brake caliper are close to each other, the elastic structure of the leaf spring is compressed and deformed. During compression and deformation, since the bending portion is bent inward and the outward-expanding portion extends from the extending portion to the outside, an inward bending angle of the bending portion will become smaller, an outward expanding angle of the outward-expanding portion will become larger, and the overall deformation of the elastic structure is shared by the bending portion and the outward-expanding portion, so that the plastic deformation is avoided, and the maximum deflection that the leaf spring can bear can also be increased correspondingly.

In addition, in the technical solution, a thickness of the leaf spring is not reduced, and accordingly, a reduction of the elastic restoring force of the leaf spring can also be avoided. It can be seen that the technical solution of the disclosure can increase the maximum deflection that the leaf spring can bear on the premise of ensuring the elastic restoring force of the leaf spring.

Furthermore, since the technical solution of the invention can increase the maximum deflection that the leaf spring can bear on the premise of ensuring the elastic restoring force of the leaf spring, in an aspect, the brake caliper assembly is adaptable to a thinner to-be-braked member, which expands the application scope of the brake caliper assembly to a certain extent; in another aspect, even if the first brake caliper and the second brake caliper have relatively more wear after repeated braking, the leaf spring is still less prone to a plastic deformation, and can play its role in elastic restoration normally, and prolong service life of the brake caliper assembly to a certain extent; and in the last aspect, a larger distance between the first brake caliper and the second brake caliper of the brake caliper assembly in the inoperative state is allowed, so that in the inoperative state, even the first brake caliper and the second brake caliper vibrate violently under the action of an external force, the possibility of the to-be-braked member being impacted by the first brake caliper and the second brake caliper is relatively small, thereby avoiding to the utmost extent that the to-be-braked member is subjected to a braking force from the brake caliper assembly in the inoperative state, which affects the normal operation of the to-be-braked member.

In addition, in the brake caliper assembly of the invention, a portion located between the extending portion and the abutting portion (i.e., the outward-expanding portion) gradually extends from the extending portion to the outer side of the leaf spring. In comparison to an arrangement where the portion between the extending portion and the abutting portion is configured to gradually extend from the extending portion to the inner side of the leaf spring, the arrangement in this technical solution can reduce the possibility of interference between the leaf spring and the to-be-braked member, thereby lowering the probability of damage due to a contact between the leaf spring and the to-be-braked member, and avoiding shortening service lives of the leaf spring and the to-be-braked member to a certain extent.

The brake caliper assembly according to the invention further comprises a mounting member, the mounting member is arranged between the first brake caliper and the second brake caliper, and the leaf spring is fixedly connected to the mounting member.

In the case of adopting the above technical solution, with an arrangement of the mounting member for mounting the leaf spring, the leaf spring can be fixedly connected to the mounting member so as to be fastened in the brake caliper assembly, thereby facilitating the mounting of the leaf spring into the brake caliper assembly.

According to the invention, the mounting member comprises a body and a support portion, two sides of the body substantially extending vertically to form the support portion, the leaf spring further comprises a connecting structure and a retaining portion that are connected to each other, the retaining portion is connected to the bending portion, and when the assembling is completed, the connecting structure is fixedly connected to the body, and the retaining portion abuts against an outer side of the support portion.

In the case of adopting the above technical solution, in the process of compressing the leaf spring, the support portion of the mounting member can support the retaining portion, which assists in improving rigidity of the retaining portion, so that the retaining portion is less prone to a deformation, and the impact on a restoring effect of the leaf spring to the first brake caliper and the second brake caliper caused by a reduction of the elastic restoring force of the leaf spring due to the deformation of the retaining portion is avoided to the utmost extent, thereby further ensuring that the first brake caliper and the second brake caliper can be completely separated from the to-be-braked member, and avoiding to the utmost extent that the to-be-braked member is subjected to a braking force from the brake caliper assembly in the inoperative state, which affects the normal operation of the to-be-braked member.

In a preferred technical solution of the above-mentioned brake caliper assembly, the connecting structure comprises a connecting portion and an arch portion that are connected to each other, the arch portion is connected between the connecting portion and the pressing portion, and when the assembling is completed, the connecting portion is fixedly connected to the body, and the arch portion is located above a joint between the body and support portion to avoid the joint.

In the case of adopting the above technical solution, the arch portion can accommodate the joint between the body and the support portion of the mounting member to prevent the retaining portion from being opened outwards to fail in being supported by the support portion due to that a portion of the leaf spring close to the joint of the two abuts on the joint, thereby ensuring that the support portion can effectively assist in improving the rigidity of the retaining portion.

In a preferred technical solution of the above-mentioned brake caliper assembly, the mounting member comprises a body and a support portion, and the leaf spring is fixedly connected to the support portion.

In a preferred technical solution of the above-mentioned brake caliper assembly, the pressing portion is in smooth connection with the bending portion.

In the case of adopting the above technical solution, an excessive stress concentrated at the joint between the retaining portion and the bending portion is avoided, so that the joint between the bending portion and the retaining portion is not easy to be damaged, and service life of the leaf spring is prolonged.

In a preferred technical solution of the above-mentioned brake caliper assembly, the bending portion is an arc-shaped bending portion.

In the case of adopting the above technical solution, in the compression and deformation process of the elastic structure of the leaf spring, the arc-shaped bending portion is more likely to be deformed, and the strain on the bending portion is relatively uniformly dispersed on the entire bending portion. The stress in the bending portion will not be seriously concentrated at a certain position on the bending portion, therefore, the bending portion can bear a relatively large amount of deformation and is less prone to a plastic deformation, thereby further increasing the maximum deflection that the leaf spring can bear.

In a preferred technical solution of the above-mentioned brake caliper assembly, width of the bending portion, the extending portion, the outward-expanding portion, and the abutting portion gradually decreases from the bending portion to the abutting portion.

In the case of adopting the above technical solution, in comparison to an arrangement where the thicknesses of the bending portion, the extending portion, the outward-expanding portion and the abutting portion are set to be identical, the arrangement as described above requires less material for making the elastic structure of the leaf spring, thereby lowering the manufacturing cost. In addition, when the bending portion, the extending portion, the outward-expanding portion and the abutting portion are arranged close to the brake disc in this order, the possibility of interference between the leaf spring and the brake disc is further reduced, thereby further reducing the probability of damage to the leaf spring and the brake disc, and further avoiding shortening the service lives of the leaf spring and the brake disc.

In a preferred technical solution of the above-mentioned brake caliper assembly, the first brake caliper comprises a first caliper body and a first friction member, the second brake caliper comprises a second caliper body and a second friction member, the first friction member is located on one side, close to the to-be-braked member, of the first caliper body, and is movably connected to the first caliper body, and the second friction member is located on one side, close to the to-be-braked member, of the second caliper body, and is movably connected to the second caliper body, and the drive assembly is configured to enable the first friction member and/or the second friction member to move relative to the first caliper body and the second caliper body, respectively, so that the first friction member and/or the second friction member abuts against the to-be-braked member to brake the to-be-braked member.

In a preferred technical solution of the above-mentioned brake caliper assembly, the brake caliper assembly further comprises a pressing member, the mounting member is connected to the first caliper body and/or the second caliper body, the pressing member is fixedly connected to the mounting member, two ends of the pressing member are respectively pressed against the first friction member and the second friction member to prevent the first friction member and the second friction member from shaking.

In the case of adopting the above technical solution, under the pressing of the pressing member, the first friction member and the second friction member can be prevented from shaking, and accordingly can be prevented from colliding with the to-be-braked member in the inoperative state, thereby avoiding that the to-be-braked member is subjected to a braking force from the brake caliper assembly in the inoperative state, which affects the normal operation of the to-be-braked member.

In a preferred technical solution of the above-mentioned brake caliper assembly, the pressing member is riveted to the mounting member, and a riveting hole in the pressing member is a specially shaped hole.

In the case of adopting the above technical solution, after riveting between the pressing member and the mounting member is completed, a riveting member can completely or partially fill the riveting hole in the pressing member to prevent the pressing member from rotating, so that the pressing of the pressing member on the first friction member and the second friction member is ensured, and shaking of the first friction member and the second friction member is avoided, thereby further avoiding affecting the normal operation of the to-be-braked member.

In a preferred technical solution of the above-mentioned brake caliper assembly, the leaf spring comprises two elastic structures. When the brake caliper assembly is in an inoperative state, a distance between the first friction member and the second friction member is less than a free width of the leaf spring, wherein the free width is a distance between an outer side of an abutting portion of one of the elastic structures and an outer side of an abutting portion of the other elastic structure when the leaf spring is in a free state.

In the case of adopting the above technical solution, in the inoperative state, the leaf spring can abut with the first friction member and the second friction member, and exert a certain pressing force on the first friction member and the second friction member, to prevent the first friction member and the second friction member from moving or colliding with the to-be-braked member in the inoperative state, thereby avoiding that the to-be-braked member is subjected to a braking force from the brake caliper assembly in the inoperative state, which affects the normal operation of the to-be-braked member.

In a preferred technical solution of the above-mentioned brake caliper assembly, the abutting portion is of an arc-shaped structure, and the abutting portion abuts on the first brake caliper and/or the second brake caliper through an outer curved surface of the arc-shaped structure.

In the case of adopting the above technical solution, when the first brake caliper and the second brake caliper are close to each other, the elastic structure of the leaf spring is compressed and deformed. During compression and deformation, an abutting position of the abutting portion will change. The abutting portion is of an arc-shaped structure and abuts on the first brake caliper and/or the second brake caliper through the outer curved surface of the arc-shaped structure; during compression and deformation of the leaf spring, the abutting position of the abutting portion can change gradually (rather than abruptly), so that the abutting portion can always abut on the first brake caliper and/or the second brake caliper stably, to achieve a good limiting effect on the first brake caliper and/or the second brake caliper.

In a second aspect, the invention also provides a brake, comprising any one of the brake caliper assemblies as described above and the to-be-braked member, the to-be-braked member being a brake disc.

In the case of adopting the above technical solution, the brake of the invention uses the above-mentioned brake caliper assembly, and accordingly the brake also has the technical effects of the above-mentioned brake caliper assembly. Furthermore, the foregoing brake caliper assembly is adaptable to a brake disc with less thickness, thereby helping save manufacturing material and reduce the weight of the brake.

In a third aspect, the invention also provides a vehicle, comprising the brake as described above.

In the case of adopting the above technical solution, since the vehicle of the invention uses the above-mentioned brake, the vehicle also has the technical effect of the above-mentioned brake. Furthermore, the reduced thickness of the brake disc of the brake facilitates a reduction in the total weight of the vehicle. When the first brake caliper and the second brake caliper vibrate violently in the inoperative state, the brake caliper assembly in the above-mentioned brake can protect the normal operation of the brake disc from being affected as much as possible, and accordingly, even if the vehicle travels on a bumpy road, the brake is less prone to affecting the normal rotation of wheels, thereby ensuring running smoothness of the vehicle on the bumpy road.

### Description of the Drawings

Preferred embodiments of the invention are described below with reference to the accompanying drawings, in which:
Fig. 1 is a schematic structural diagram of an existing vehicle brake, which shows a situation of the brake in an inoperative state;
Fig. 2 is a schematic structural diagram of an embodiment of a brake caliper assembly in a brake of the invention;
Fig. 3 is a schematic structural diagram of an embodiment of a brake caliper assembly in a brake of the disclosure after a first caliper body and a second caliper body are hidden;
Fig. 4 is a schematic structural diagram of an embodiment of a mounting member, a pressing member, and a leaf spring in a brake of the invention;
Fig. 5 is a partial enlarged view of portion A in Fig. 4; and
Fig. 6 is a schematic structural diagram of another embodiment of a brake of the invention.

### Reference signs:

1. brake; 11. brake disc; 12. brake caliper; 13. piston; 14. friction pad; 15. friction pad mounting base;
21. first brake caliper; 211. first caliper body; 212. first friction member; 2121. first friction pad; 2122. first friction pad mounting base; 22. second brake caliper; 221. second caliper body; 222. second friction member; 2221. second friction pad; 2222. second friction pad mounting base; 23. mounting member; 231. body; 232. support portion; 24. pressing member; 25. leaf spring; 251. bending portion; 252. extending portion; 253. outward-expanding portion; 254. abutting portion; 255. connecting structure; 2551. connecting portion; 2552. arch portion; 256. retaining portion; 26. connecting rod; 27. rivet;
3. brake; 31. brake disc; 32. first clamp body; 33. second clamp body; 34. piston; 35. first friction pad; 36. first friction pad mounting base; 37. second friction pad; 38. second friction pad mounting base; 39. bracket; 3901. pin; and
100(300). cavity.

### Detailed Description of Embodiments

It should be noted that, in the description of the invention, "front," "rear," "upper" and "lower" are based on a normal placement state of the vehicle, where "front" refers to a head direction of the vehicle, "rear" refers to a rear direction of the vehicle, "upper" refers to a roof direction, and "lower" refers to a vehicle bottom direction. "Inner" and "outer" are based on a normal installation state of the brake under the normal placement state of the vehicle. "Inner" refers to being between the first brake caliper and the second brake caliper in the brake of the vehicle. "Outer" refers to, in the brake of the vehicle, a direction of the other side of the first caliper horizontally opposite the inside of the first brake caliper and a direction of the other side of the second brake caliper horizontally opposite the inside of the second brake caliper direction. The terms that indicate the direction or positional relationship, such as "front," "rear," "upper," "lower," "vertical," and "upright," are based on the direction or positional relationship shown in the figures, which are merely for ease of description instead of indicating or implying that the device or element must have a particular orientation and be constructed and operated in a particular orientation, and therefore, should not be construed as limiting the invention. In addition, the terms "first" "second" and "third" are for descriptive purposes only and should not be construed as indicating or implying relative importance.

In addition, it should also be noted that, in the description of the invention, the terms "arrangement," "mounting," "mutual connection," and "connection" should be interpreted in a broad sense unless explicitly defined and limited otherwise. For example, a connection may be a fixed connection, a detachable connection, or an integral connection; or may mean a direct connection, an indirect connection by means of an intermediary, or internal communication between two elements. For those skilled in the art, the specific meaning of the above-mentioned terms in the disclosure can be interpreted according to the specific situation.

Based on the problem of how to increase the maximum deflection allowed by a leaf spring on the premise of ensuring an elastic restoring force of the leaf spring pointed out in the Background Art, the disclosure provides a brake caliper assembly with a leaf spring, aiming to increase the maximum deflection that the leaf spring can bear on the premise of ensuring the elastic restoring force of the leaf spring.

The technical solutions of the invention will be described in detail below with reference to a brake of a vehicle.

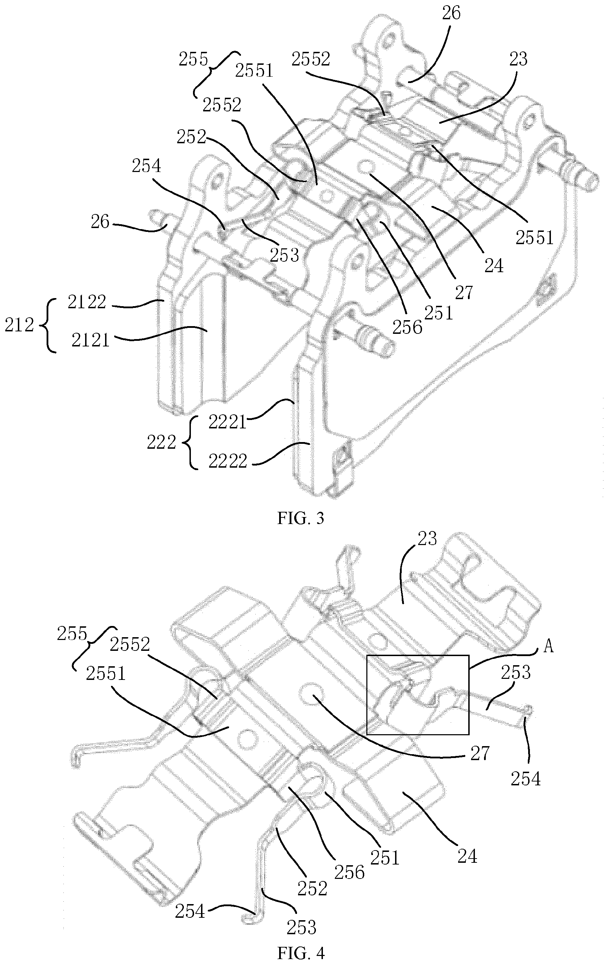

The brake of the vehicle includes a brake caliper assembly and a brake disc. The brake disc is fixedly connected to a wheel of the vehicle. The brake restricts the movement of the brake disc through the brake caliper assembly to hinder the rotation of the wheel, thereby realizing braking (deceleration or stop) of the vehicle. As shown in Figs. 2 and 3, the brake caliper assembly comprises a first brake caliper 21, a second brake caliper 22, a drive assembly, a mounting member 23, a pressing member 24, leaf springs 25 and connecting rods 26. The first brake caliper 21 comprises a first caliper body 211 and a first friction member 212, and the first friction member 212 comprises a first friction pad 2121 and a first friction pad mounting base 2122 that are connected to each other. The second brake caliper 22 comprises a second caliper body 221 and a second friction member 222, and the second friction member 222 comprises a second friction pad 2221 and a second friction pad mounting base 2222 that are connected to each other. The drive assembly comprises a first piston (not shown in the figure) and a second piston (not shown in the figure).

In the case where the brake is installed in the vehicle, continuing to refer to Figs. 2 and 3, the first caliper body 211 and the second caliper body 221 are arranged opposite each other and are located on two sides, respectively, of the brake disc (not shown in the figure); the first caliper body 211 and the second caliper body 221 are respectively provided with a cavity internally; at least a part of the first piston is accommodated in the cavity of the first caliper body 211, and the first piston is slidably connected to one side, close to the brake disc, of the first caliper body 211; at least a part of the second piston is accommodated in the cavity of the second caliper body 221, and the second piston is slidably connected to one side, close to the brake disc, of the second caliper body 221. The first friction member 212 and the second friction member 222 are both located between the first piston and the second piston. The first friction pad mounting base 2122 is in contact with the first piston, and the first friction pad 2121 is fixedly connected to one side, close to the brake disc, of the first friction pad mounting base 2122. The second friction pad mounting base 2222 is in contact with the second piston, and the second friction pad 2221 is fixedly connected to one side, close to the brake disc, of the second friction pad mounting base 2222. Two connecting rods 26 are respectively arranged at the front and the rear of the caliper body, and both ends of the two connecting rods 26 are respectively connected to the first caliper body 211 and the second caliper body 221. The two connecting rods 26 sequentially pass through the first friction pad mounting base 2122 and the second friction pad mounting base 2222. The two friction pad mounting bases can slide along extending directions of the two connecting rods 26. The mounting member 23 is arranged between the first brake caliper 21 and the second brake caliper 22. The mounting member 23 extends in a front-rear direction. The front and rear ends of the mounting member 23 are respectively clamped on the two connecting rods 26. There are two leaf springs 25. One leaf spring 25, the pressing member 24 and the other leaf spring 25 are arranged in sequence from front to rear, are fixedly connected to the mounting member 23, and are all located above the brake disc to avoid the respective interference of the leaf springs 25 and the pressing member 24 with the brake disc after the friction pads are worn. The two leaf springs 25 are both arranged between the first friction member 212 and the second friction member 222, and each of the two leaf springs 25 has both ends abut on the first friction pad mounting base 2122 and the second friction pad mounting base 2222 respectively.

The cavities of the first brake caliper 21 and the second brake caliper 22 both fluidly communicate with a vehicle hydraulic system and are filled with a brake fluid from the vehicle hydraulic system. The hydraulic system can control the brake fluid pressure in the cavities of the two caliper bodies. When a driver depresses a brake pedal according to the need of braking, the hydraulic system acts to increase the brake fluid pressure in the cavities of the two brake caliper bodies, so that the two pistons move toward a direction close to the brake disc until the two friction pads abut against the brake disc, that is, the two friction pads abut on the brake disc and produce an interaction force, and the brake disc rotating with the wheel slows down or even stops under the friction action of the friction pads so as to realize braking of the wheel. During braking, the two friction pads gradually approach the brake disc, and the leaf springs 25 are compressed. When canceling the braking, the driver fully releases the brake pedal, and the hydraulic system acts such that the brake fluid pressure in the cavities of the brake caliper bodies is reduced to allow the friction pads to move away from the brake disc. At this point, the leaf springs 25 assists in moving of the two friction pads through its elastic restoring action and finally restore the two friction pads to the position where they are in the inoperative state.

In order to increase the maximum deflection allowed by each leaf spring 25 on the premise of ensuring the elastic restoring force of the leaf spring 25, as shown in Figs. 3 and 4, each leaf spring 25 is of an elastic structure. The elastic structure comprises a bending portion 251, an extending portion 252, an outward-expanding portion 253, and an abutting portion 254 that are connected in sequence, the outward-extending portion 253 extends from the extending portion 252 to the outside of the leaf spring 25, the bending portion 251 is bent inwards, and the abutting portion 254 abuts on the first friction pad mounting base 2122 and the second friction pad mounting base 2222. Furthermore, in Figs. 3 and 4, the bending portion 251 is of an arc-shaped bending portion 251. Specifically, the arc-shaped bending portion 251 may be a circular arc-shaped bending portion, or an elliptical arc-shaped bending portion. In addition, although in Figs. 3 and 4, the extending portion 252 extends straightly and flatly, and its extending direction is neither inward nor outward, the extending portion 252 may also extend inward or outward, or the like.

When the first brake caliper 21 and the second brake caliper 22 are close to each other, the elastic structure of the leaf spring 25 that abuts on the first friction pad mounting base 2122 and the second friction pad mounting base 2222 is compressed and deformed. During compression and deformation, since the bending portion is bent inward and the outward-expanding portion extends from the extending portion to the outside, an inward bending angle of the bending portion will become smaller, an outward expanding angle of the outward-expanding portion will become larger, and the overall deformation of the elastic structure is shared by the bending portion and the outward-expanding portion, so that the plastic deformation is avoided, and the maximum deflection that the leaf spring can bear can also be increased correspondingly. Moreover, in the technical solution, the thickness of the leaf spring 25 is not reduced, and accordingly, a reduction of the elastic restoring force of the leaf spring 25 can also be avoided. It can be seen that the structure of the leaf spring 25 of the invention can increase the maximum deflection that the leaf spring 25 can bear on the premise of ensuring the elastic restoring force of the leaf spring 25.

In the case where the bending portion is an arc-shaped bending portion, during compression and deformation of the elastic structure of the leaf spring 25, the arc-shaped bending portion 251 is more likely to be deformed, and the strain on the bending portion 251 is relatively uniformly dispersed on the entire bending portion 251. The stress in the bending portion 251 will not be seriously concentrated at a certain position on the bending portion, therefore, the bending portion 251 can bear a relatively large amount of deformation and is less prone to a plastic deformation, thereby further increasing the maximum deflection that the leaf spring 25 can bear.

In addition, in the brake of the invention, a portion located between the extending portion 252 and the abutting portion 254 (i.e., the outward-expanding portion 253) gradually extends from the extending portion 252 to the outer side of the leaf spring 25. In comparison to an arrangement where the portion between the extending portion 252 and the abutting portion 254 is configured to gradually extend from the extending portion 252 to the inner side of the leaf spring 25, the arrangement in this technical solution can reduce the possibility of interference between the leaf spring 25 and the brake disc, thereby lowering the probability of damage due to a contact between the leaf spring 25 and the brake disc, and avoiding shortening the service lives of the leaf spring 25 and the brake disc to a certain extent.

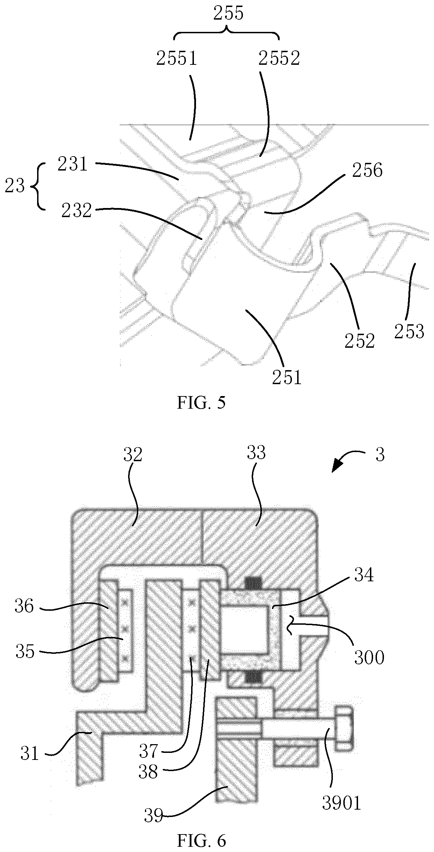

As shown in Fig. 5, the mounting member 23 comprises a body 231 and a support portion 232. Two sides of the body 231 substantially extend vertically to form the support portion 232, that is, the support portion 232 is formed by extending substantially from top to bottom. Specifically, the support portion 232 may be formed by extending from the top to the bottom (hereinafter referred to as a standard vertical direction). In addition, the extending direction of the support portion 232 may also be at a certain angle with the standard vertical direction. For example, the included angle is not greater than 45°, as long as the extending direction of the support portion 232 is substantially the direction from top to bottom. As shown in Figs. 3 to 5, each leaf spring 25 further comprises a connecting structure 255 and a retaining portion 256. The retaining portion 256 is connected to the bending portion 251. When the assembling is completed, the connecting structure 255 is fixed to the body 231, and the retaining portion 256 abuts against an outer side of the support portion 232.

The retaining portion 256 abuts against the outer side of the support portion 232, that is, the retaining portion 256 abuts against the outer side of the support portion 232, where the force exerted by the retaining portion 256 on the support portion 232 and the force exerted by the support portion 232 on the retaining portion 256 constitute an action-force-reaction-force pair. Therefore, during compression of the leaf spring 25, the support portion 232 of the mounting member 23 can support the retaining portion 256, which assists in improving rigidity of the retaining portion 256, so that the retaining portion 256 is less prone to a deformation, and the impact on a restoring effect of the leaf spring 25 to the first brake caliper 21 and the second brake caliper 22 caused by a reduction of the elastic restoring force of the leaf spring 25 due to the deformation of the retaining portion 256 is avoided to the utmost extent, thereby further ensuring that the first brake caliper 21 and the second brake caliper 22 can be completely separated from the brake disc, and avoiding to the utmost extent that the brake disc is subjected to a braking force from the brake caliper assembly in the inoperative state, which affects the normal operation of the brake disc. Moreover, when the assembling is completed, the above-mentioned leaf spring 25 is configured such that the retaining portion 256 abuts against the outer side of the support portion 232, rather than there is a gap between the retaining portion 256 and the support portion 232, and the retaining portion 256 abuts against the outer side of the support portion 232 until the leaf spring 25 is compressed to a certain extent when the assembling is completed. With this arrangement, when the assembling is completed, a foreign matter (such as stone) can be prevented from being caught between the retaining portion 256 and the support portion 232, and accordingly, the foreign matter is prevented from being sandwiched between the retaining portion 256 and the support portion 232 during abutting, thereby preventing the retaining portion 256 and the support portion 232 from being damaged by the foreign matter, and prolonging the service lives of the leaf spring 25 and the mounting member 23.

Referring back to Fig. 3 to Fig. 5, the connecting structure 255 comprises a connecting portion 2551 and an arch portion 2552 that are connected to each other, and the arch portion 2552 is connected between the connecting portion 2551 and the retaining portion 256. When the assembling is completed, the connecting portion 2551 is fixedly connected to the body 231 of the mounting member 23, and the arch portion 2552 is located above a joint between the body 231 and support portion 232 to avoid the joint. The arch portion 2552 may be of an arc-shaped structure, or may adopt a plurality of connected strips or the like. Those skilled in the art can flexibly set the specific structure of the arch portion 2552 in practical applications, as long as the structure can be arched to avoid the joint between the body 231 and the support portion 232.

By avoiding the joint between the body 231 and the support portion 232 of the mounting member 23,the arch portion 2552 can prevent the retaining portion 256 from being opened outwards to fail in being supported by the support portion 232 due to the arrangement that a portion of the leaf spring 25 close to the joint of the two abuts on the joint, thereby ensuring that the support portion 232 can effectively assist in improving the rigidity of the retaining portion 256. Preferably, the retaining portion 256 and the bending portion 251 are in smooth connection, avoiding excessive stress concentrated at the joint between the retaining portion 256 and the bending portion 251, so that the joint between the bending portion 251 and the retaining portion 256 is not easy to be damaged, and the service life of the leaf spring 25 is prolonged.

When the brake caliper assembly is in an inoperative state, a distance between the first friction pad mounting base 2122 and the second friction pad mounting base 2222 is shorter than the free width of the leaf spring 25. The free width is a distance between an outer side of one abutting portion 254 and an outer side of the other abutting portion 254 when the leaf spring 25 is in a free state. This free state is a state in which the leaf spring 25 is not subjected to an external force that can compress it to be deformed.

In the inoperative state, the leaf spring 25 can abut on the first friction pad mounting base 2122 and the second friction pad mounting base 2222, and exert a certain pressing force on the first friction pad mounting base 2122 and the second friction pad mounting base 2222, to prevent the first friction member 212 and the second friction member 222 from moving or colliding with the brake disc in the inoperative state, thereby preventing the brake disc being subjected to a braking force from the brake caliper assembly in the inoperative state, which affects the normal operation of the brake disc. Moreover, when the leaf spring 25 is provided with the retaining portion 256, the mounting member 23 has the supporting portion 232. When the retaining portion 256 abuts against the outer side of the support portion 232, a supporting effect of the support portion 232 on the retaining portion 256 can further increase the pressing force exerted by the leaf spring 25 on the first friction pad mounting base 2122 and the second friction pad mounting base 2222, thereby further avoiding affecting the normal operation of the brake disc.

As shown in Figs. 3 and 4, width of the bending portion 251, the extending portion 252, the outward-expanding portion 253, and the abutting portion 254 gradually decreases from the bending portion (251) to the abutting portion (254). For example, in Figs. 3 and 4, the elastic structure is divided into three segments connected in sequence, a part of the extending portion 252 and the bending portion 251 constitute a first segment with an unchanged width, the rest part of the extending portion 252 constitutes a second segment with a reduced width, and the outward-expanding portion 253 and the abutting portion 254 constitute a third segment with an unchanged width. Of course, when the elastic structure is divided into multiple segments by width, the variation trend of the width of each segment may be different.

In addition, when the bending portion 251, the extending portion 252, the outward-expanding portion 253 and the abutting portion 254 are arranged close to the brake disc in this order, the possibility of interference between the leaf spring 25 and the brake disc is further reduced, thereby further reducing the probability of damage to the leaf spring 25 and the brake disc, and further avoiding shortening the service lives of the leaf spring 25 and the brake disc.

As shown in Figs. 3 and 4, the body 231 of the mounting member 23 and the pressing member 24 are riveted to each other by a rivet 27. A riveting hole in the body 231 is a specially shaped hole. Both ends of the pressing member 24 are pressed against the first friction pad mounting base 2122 and the second friction pad mounting base 2222 respectively to prevent the first friction member 212 and the second friction member 222 from shaking. The specially shaped hole is a non-circular hole, such as a rectangular hole or a zig-zag hole.

After riveting of the pressing member 24 and the mounting member 23 is completed, a riveting member can completely or partially fill the riveting hole in the pressing member 24 to prevent the pressing member 24 from rotating, so that a pressing effect of the pressing member 24 on the first friction pad mounting base 2122 and the second friction pad mounting base 2222 is ensured, and shaking of the first friction pad mounting base 2122 and the second friction pad mounting base 2222 is avoided, thereby further avoiding affecting the normal operation of the brake disc.

As shown in Fig. 3, the abutting portion 254 is of an arc-shaped structure, and the abutting portion 254 abuts on the first friction pad mounting base 2122 and the second friction pad mounting base 2222 through an outer curved surface of the arc-shaped structure. The arc-shaped structure may be a circular arc-shaped bending structure, or an elliptical arc-shaped bending structure.

During compression and deformation of the leaf spring 25, an abutting position of the abutting portion 254 will change. If the abutting portion 254 has a structure of multiple pointed ends, during compression and deformation of the leaf spring 25, the abutting position may suddenly change from one of the pointed ends to the other of the pointed ends. As a result, the abutting portion 254 cannot always abut on the first friction pad mounting base 2122 and the second friction pad mounting base 2222 stably. In this embodiment, the abutting portion 254 is of an arc-shaped structure and abuts on the first friction pad mounting base 2122 and the second friction pad mounting base 2222 through the outer curved surface of the arc-shaped structure, so that during compression and deformation of the leaf spring 25, the abutting position of the abutting portion 254 can gradually change, and the abutting portion 254 can always stably abut on the first friction pad mounting base 2122 and the second friction pad mounting base 2222, thereby achieving a good limiting effect on the first friction pad mounting base 2122 and the second friction pad mounting base 2222.

It should be noted that the above preferred embodiment is merely used to illustrate the principles of the disclosure and is not intended to limit the scope of protection of the disclosure. Those skilled in the art can adjust the above arrangements without deviating from the principles of the disclosure, so that the disclosure can be applied to more specific application scenarios.

For example, on the premise of ensuring the operation of the brake, some components in the above embodiments and some structures included in the components can be selected based on specific product requirements. The changed technical solutions do not deviate from the concept of the disclosure, and therefore also fall within the scope of protection of the disclosure. For example, the first friction member 212 and the second friction member 222 may be omitted, and when a brake is applied, the first caliper body 211 and the second caliper body 221 are in direct contact with the brake disc to realize braking. For another example, the friction pad mounting bases in the friction members may be omitted, and the friction pads may be directly and fixedly connected to the pistons. For another example, the two connecting rods 26 may also be omitted, and the friction members may be fixedly connected to the pistons. Slide slots for accommodating the pistons may be provided in the first caliper body 211 and the second caliper body 221. The slide slots may guide sliding directions of the pistons so as to limit moving directions of the friction members. For another example, the pressing member 24 may also be omitted. For another example, both the connecting structure 255 and the retaining portion 256 of the leaf spring 25 may be omitted. Further, in the instances where the leaf spring 25 has the connecting structure 255, the arch portion 2552 in the connecting structure 255 of the leaf spring 25 may also be omitted.

For another example, in the disclosure, although illustration is made by taking the drive assembly using the piston structure as an example, in some alternative embodiments, in addition to the pistons, a motor, a cylinder, or the like can also be used as the drive assembly.

In the case where the first friction member 212 is located on one side, close to the brake disc, of the first caliper body 211 and is movably connected to the first caliper body 211, and the second friction member 222 is located on one side, close to the brake disc, of the second caliper body 221 and is connected to the second caliper body 221, the drive assembly may be configured to enable the first friction member 212 and/or the second friction member 222 to move relative to the corresponding first caliper body 211 and/or the second caliper body 221, to make the first friction member 212 and/or the second friction member 222 abut against the brake disc, so as to brake the brake disc. That is, the drive assembly may be configured to enable the first friction member 212 to move relative to the first caliper body 211 that is corresponding to the first friction member 212, so that the first friction member 212 can abut against the brake disc to achieve braking of the brake disc. The drive assembly may also be configured to enable the second friction member 222 to move relative to the second caliper body 221 that is corresponding to the second friction member 222, so that the second friction member 222 can abut against the brake disc to achieve braking of the brake disc. The driving assembly may also be configured to enable the first friction member 212 to move relative to the first caliper body 211 and enable the second friction member 222 to move relative to the second caliper body 221, so that the first friction member 212 and the second friction member 222 can abut against the brake disc to achieve braking of the brake disc.

In the case where the first friction member 212 is located on one side, close to the brake disc, of the first caliper body 211 and is fixedly connected to the first caliper body 211, and the second friction member 222 is located on one side, close to the brake disc, of the second caliper body 221 and is fixedly connected to the second caliper body 221, the drive assembly may be configured to directly or indirectly enable the first friction member 212 (may directly enable the first friction member 212 by enabling first caliper body 211), and/or directly or indirectly enable the second friction member 222 (may indirectly enable the second friction member 222 by enabling the second caliper body 221), so that the first friction member 212 and/or the second friction member 222 can abut against the brake disc to achieve braking of the brake disc.

For another example, although the above embodiment is illustrated by taking the following as an example: the brake is provided with the mounting member 23, the mounting member 23 comprises the body 231 and the support portion 232, the connecting structure 255 of the leaf spring 25 is fixedly connected to the body 231, the pressing member 24 is connected to the body 231 by riveting, the riveting hole in the pressing member 24 is a specially shaped hole, in other alternative embodiments, the leaf spring 25 may also be fixedly connected to the support portion 232; the mounting member 23 may also comprise the body 231 but without the support portion 232; the mounting member 23 may be omitted, and then, the leaf spring 25 and the pressing member 24 can be directly and fixedly connected to the first brake caliper 21 and/or the second brake caliper 22; the pressing member 24 may also be connected to the support portion 232; the riveting hole in the pressing member 24 may also be a round hole; the specific connection method of the pressing member 24 and the mounting member 23 may also be welding, screwing, or the like.

For another example, although the above embodiment is illustrated by taking the bending portion 251 as an arc-shaped bending portion as an example, in other alternative embodiments, the bending portion 251 may be configured into a plurality of strips connected smoothly, or the like.

For another example, although the above embodiment is illustrated by taking the following as an example: the elastic structure is divided into three segments connected in sequence, a part of the extending portion 252 and the bending portion 251 constitute a first segment with an unchanged width, the rest part of the extending portion 252 constitutes a second segment with a reduced width, and the outward-expanding portion 253 and the abutting portion 254 constitute a third segment with an unchanged width, in other alternative embodiments, the elastic structure may also have two segments or four segments connected in sequence. Width of the bending portion 251, the extending portion 252, the outward-expanding portion 253, and the abutting portion 254 may also gradually decrease from the bending portion 251 to the abutting portion 254. Alternatively, the bending portion 251, the extending portion 252, the outward-expanding portion 253, and the abutting portion 254 have the same width.

For another example, although the above embodiment is illustrated by taking the following as an example: the first friction member 212 is indirectly movably connected to the first caliper body 211 through the two connecting rods 26, and the second friction member 222 is indirectly movably connected to the second caliper body 221 through the two connecting rods 26, this is not intended to limit the scope of protection of the disclosure. In some other embodiments, the first friction member 212 may be indirectly movably connected to the first caliper body 211 by being fixedly connected to the first piston, and the second friction member 222 may be indirectly movably connected to the second caliper body 221 by being fixedly connected to the second piston. Alternatively, as shown in Fig. 6, the brake 3 comprises a brake disc 31, a first clamp body 32, a second clamp body 33, a piston 34, a first friction pad 35, a first friction pad mounting base 36, a second friction pad 37, and a second friction pad mounting base 38. A difference between brake 3 and the brake shown in Figs. 2 to 5 lies in that the brake 3 further comprises a bracket 39 and a pin 3901 fixedly connected to the bracket, and only the second clamp body 33 of the brake 3 is provided with a cavity 300 for accommodating the brake fluid, the first friction pad mounting base 36 is directly fixedly connected to the first clamp body 32, the second friction pad mounting base 38 is indirectly movably connected to the second clamp body 33 by being fixedly connected to the piston 34, the bracket 39 is fixedly connected onto the vehicle, and the second clamp body 33 is slidably connected to the pin 3901. During braking, a brake fluid pressure in the cavity 300 increases, and the piston 34 slides relative to the second clamp body 33 in a direction close to the brake disc 31 so that the second friction pad 37 abuts against the brake disc 31, and then, the second clamp body 33 and the pin 3901 slide relative to each other, so that the first friction pad 35 also abuts against the brake disc 31, thereby realizing braking.

For another example, the above embodiment is illustrated by taking the following as an example: the leaf spring 25 comprises two elastic structures, the abutting portions 254 of the two elastic structures are both of an arc-shaped structure, and the two abutting portions 254 respectively abut on the first friction pad mounting base 2122 and the second friction pad mounting base 2222; when the brake caliper assembly is in an inoperative state, the distance between the first friction pad mounting base 2122 and the second friction mounting base 2222 is less than the free width of the leaf spring 25. However, an alternative arrangement is that in the inoperative state, the distance between the first friction pad mounting base 2122 and the second friction pad mounting base 2222 is equal to or greater than the free width of the leaf spring 25; the number of the elastic structures may also be adjusted, for example, the number of the elastic structures is reduced to one; and the structure of the abutting portion 254 may also be adjusted, for example, the abutting portion 254 is of a block structure or the like.

For another example, although the above embodiment is illustrated by taking the leaf spring 25 above the brake disc as an example, this is not intended to limit the scope of protection of the disclosure. In some other embodiments, when the leaf spring 25 is in contact with the first friction pad mounting base 2122 and the second friction pad mounting base 2222, that is, a lower end of the leaf spring 25 may be located below an upper side face of the brake disc.

Heretofore, the technical solutions of the invention have been described in conjunction with the preferred embodiments shown in the drawings. However, those skilled in the art can readily understand that the scope of protection of the disclosure is not limited to these specific embodiments. Those skilled in the art could make equivalent changes or substitutions to the related technical features without departing from the scope of the claims

## Claims

1. A brake caliper assembly, comprising a first brake caliper (21), a second brake caliper (22), a drive assembly, and a leaf spring (25), the first brake caliper (21) and the second brake caliper (22) symmetrically arranged on either side of a to-be-braked member, and the drive assembly configured to enable the first brake caliper (21) and/or the second brake caliper (22) to abut against the to-be-braked member so as to brake the to-be-braked member,
wherein the leaf spring (25) is arranged between the first brake caliper (21) and the second brake caliper (22) and comprises an elastic structure, the elastic structure comprises a bending portion (251), an extending portion (252), an outward-expanding portion (253), and an abutting portion (254) that are connected in sequence, the outward-extending portion (253) extends from the extending portion (252) to the outside of the leaf spring (25), the bending portion (251) is bent inwards, and the abutting portion (254) abuts on the first brake caliper (21) and/or the second brake caliper (22), and
wherein the brake caliper assembly further comprises a mounting member (23) arranged between the first brake caliper (21) and the second brake caliper (22), the leaf spring (25) being fixedly connected to the mounting member (23),
**characterized in that** the mounting member (23) comprises a body (231) and a support portion (232), two sides of the body (231) substantially extending vertically to form the support portion (232); and
the leaf spring (25) further comprises a connecting structure (255) and a retaining portion (256) that are connected to each other, the retaining portion (256) is connected to the bending portion (251), and when the assembling is completed, the connecting structure (255) is fixedly connected to the body (231), and the retaining portion (256) abuts against an outer side of the support portion (232).

2. The brake caliper assembly according to claim 1, wherein the connecting structure (255) comprises a connecting portion (2551) and an arch portion (2552) that are connected to each other, the arch portion (2552) is connected between the connecting portion (2551) and the retaining portion (256), and when the assembling is completed, the connecting portion (2551) is fixedly connected to the body (231), and the arch portion (2552) is located above a joint between the body (231) and support portion (232) to avoid the joint.

3. The brake caliper assembly according to claim 1, wherein the mounting member (23) comprises a body (231) and a support portion (232), and the leaf spring (25) is fixedly connected to the support portion (232).

4. The brake caliper assembly according to claim 1, wherein the retaining portion (256) is in smooth connection with the bending portion (251).

5. The brake caliper assembly according to claim 1, wherein the bending portion (251) is an arc-shaped bending portion.

6. The brake caliper assembly according to claim 1, wherein width of the bending portion (251), the extending portion (252), the outward-expanding portion (253), and the abutting portion (254) gradually decreases from the bending portion (251) to the abutting portion (254).

7. The brake caliper assembly according to claim 1, wherein the first brake caliper (21) comprises a first caliper body (211) and a first friction member (212), the second brake caliper (22) comprises a second caliper body (221) and a second friction member (222), the first friction member (212) is located on one side, close to the to-be-braked member, of the first caliper body (211), and is movably connected to the first caliper body (211), and the second friction member (222) is located on one side, close to the to-be-braked member, of the second caliper body (221), and is movably connected to the second caliper body (221), and
the drive assembly is configured to enable the first friction member (212) and/or the second friction member (222) to move relative to the first caliper body (211) and the second caliper body (221), so that the first friction member (212) and/or the second friction member (222) abuts against the to-be-braked member to brake the to-be-braked member.

8. The brake caliper assembly according to claim 7, further comprising a pressing member (24), wherein the mounting member (23) is connected to the first caliper body (211) and/or the second caliper body (221), the pressing member (24) is fixedly connected to the mounting member (23), and two ends of the pressing member (24) are respectively pressed against the first friction member (212) and the second friction member (222) to prevent the first friction member (212) and the second friction member (222) from shaking.

9. The brake caliper assembly according to claim 8, wherein the pressing member (24) is riveted to the mounting member (23), and a riveting hole in the pressing member (24) is a specially shaped hole.

10. The brake caliper assembly according to claim 7, wherein the leaf spring (25) comprises two elastic structures, when the brake caliper assembly is in an inoperative state, a distance between the first friction member (212) and the second friction member (222) is less than a free width of the leaf spring (25),
wherein the free width is a distance between an outer side of an abutting portion (254) of one of the elastic structures and an outer side of an abutting portion (254) of the other of the elastic structures when the leaf spring (25) is in a free state.

11. The brake caliper assembly according to claim 1, wherein the abutting portion (254) is of an arc-shaped structure, and the abutting portion (254) abuts on the first brake caliper (21) and/or the second brake caliper (22) through an outer curved surface of the arc-shaped structure.

12. A brake, comprising a brake caliper assembly according to any one of claims 1 to 11.

13. A vehicle, comprising a brake according to claim 12.

## Patentansprüche

1. Bremssattelbaugruppe, aufweisend einen ersten Bremssattel (21), einen zweiten Bremssattel (22), eine Antriebsbaugruppe und eine Blattfeder (25), wobei der erste Bremssattel (21) und der zweite Bremssattel (22) symmetrisch zu beiden Seiten eines zu bremsenden Elements angeordnet sind, und die Antriebsbaugruppe dafür ausgestaltet ist, es dem ersten Bremssattel (21) und/oder dem zweiten Bremssattel (22) zu ermöglichen, an dem zu bremsenden Element anzuliegen, so dass das zu bremsende Element gebremst wird,
wobei die Blattfeder (25) zwischen dem ersten Bremssattel (21) und dem zweiten Bremssattel (22) angeordnet ist und eine elastische Struktur aufweist, wobei die elastische Struktur einen Biegeabschnitt (251), einen Erweiterungsabschnitt (252), einen nach außen expandierenden Abschnitt (253) und einen anliegenden Abschnitt (254) aufweist, die nacheinander verbunden sind, wobei sich der nach außen expandierende Abschnitt (253) von dem Erweiterungsabschnitt (252) zu der Außenseite der Blattfeder (25) erstreckt, wobei der Biegeabschnitt (251) nach innen gebogen ist und der anliegende Abschnitt (254) an dem ersten Bremssattel (21) und/oder dem zweiten Bremssattel (22) anliegt, und
wobei die Bremssattelbaugruppe ferner ein Montageelement (23) aufweist, das zwischen dem ersten Bremssattel (21) und dem zweiten Bremssattel (22) angeordnet ist, wobei die Blattfeder (25) fest mit dem Montageelement (23) verbunden ist,
**dadurch gekennzeichnet, dass** das Montageelement (23) einen Körper (231) und einen Trägerabschnitt (232) aufweist, wobei sich die beiden Seiten des Körpers (231) im Wesentlichen vertikal erstrecken, um den Trägerabschnitt (232) zu bilden, und
die Blattfeder (25) ferner eine Verbindungsstruktur (255) und einen Halteabschnitt (256) aufweist, die miteinander verbunden sind, wobei der Halteabschnitt (256) mit dem Biegeabschnitt (251) verbunden ist und, wenn der Zusammenbau abgeschlossen ist, die Verbindungsstruktur (255) fest mit dem Körper (231) verbunden ist und der Halteabschnitt (256) an einer Außenseite des Trägerabschnitts (232) anliegt.

2. Bremssattelbaugruppe nach Anspruch 1, wobei die Verbindungsstruktur (255) einen Verbindungsabschnitt (2551) und einen Bogenabschnitt (2552) aufweist, die miteinander verbunden sind, wobei der Bogenabschnitt (2552) zwischen dem Verbindungsabschnitt (2551) und dem Halteabschnitt (256) angeschlossen ist und, wenn der Zusammenbau abgeschlossen ist, der Verbindungsabschnitt (2551) fest mit dem Körper (231) verbunden ist und sich der Bogenabschnitt (2552) über einer Verbindungsstelle zwischen dem Körper (231) und dem Trägerabschnitt (232) befindet, um die Verbindungsstelle zu umgehen.

3. Bremssattelbaugruppe nach Anspruch 1, wobei das Montageelement (23) einen Körper (231) und einen Trägerabschnitt (232) aufweist und die Blattfeder (25) fest mit dem Trägerabschnitt (232) verbunden ist.

4. Bremssattelbaugruppe nach Anspruch 1, wobei der Halteabschnitt (256) in glatter Verbindung mit dem Biegeabschnitt (251) steht.

5. Bremssattelbaugruppe nach Anspruch 1, wobei der Biegeabschnitt (251) ein bogenförmiger Biegeabschnitt ist.

6. Bremssattelbaugruppe nach Anspruch 1, wobei eine Breite des Biegeabschnitts (251), des Erweiterungsabschnitts (252), des nach außen expandierenden Abschnitts (253) und des anliegenden Abschnitts (254) von dem Biegeabschnitt (251) zu dem anliegenden Abschnitt (254) allmählich abnimmt.

7. Bremssattelbaugruppe nach Anspruch 1, wobei der erste Bremssattel (21) einen ersten Sattelkörper (211) und ein erstes Reibungselement (212) aufweist, der zweite Bremssattel (22) einen zweiten Sattelkörper (221) und ein zweites Reibungselement (222) aufweist, das erste Reibungselement (212) sich an einer Seite des ersten Sattelkörpers (211), nahe dem zu bremsenden Element, befindet und beweglich mit dem ersten Sattelkörper (211) verbunden ist, und das zweite Reibungselement (222) sich an einer Seite des zweiten Sattelkörpers (221), nahe dem zu bremsenden Element, befindet und beweglich mit dem zweiten Bremssattelkörper (221) verbunden ist, und
die Antriebsbaugruppe dafür ausgestaltet ist, es dem ersten Reibungselement (212) und/oder dem zweiten Reibungselement (222) zu ermöglichen, sich im Verhältnis zu dem ersten Sattelkörper (211) und dem zweiten Sattelkörper (221) zu bewegen, so dass das erste Reibungselement (212) und/oder das zweite Reibungselement (222) an dem zu bremsenden Element anliegt oder anliegen, um das zu bremsende Element zu bremsen.

8. Bremssattelbaugruppe nach Anspruch 7, ferner ein Presselement (24) aufweisend, wobei das Montageelement (23) mit dem ersten Bremssattelkörper (211) und/oder dem zweiten Bremssattelkörper (221) verbunden ist, wobei das Presselement (24) fest mit dem Montageelement (23) verbunden ist und zwei Enden des Presselements (24) gegen das erste Reibungselement (212) beziehungsweise das zweite Reibungselement (222) gepresst werden, um zu verhindern, dass das erste Reibungselement (212) und das zweite Reibungselement (222) wackeln.

9. Bremssattelbaugruppe nach Anspruch 8, wobei das Presselement (24) an das Montageelement (23) genietet ist und ein Nietloch in dem Presselement (24) ein speziell geformtes Loch ist.

10. Bremssattelbaugruppe nach Anspruch 7, wobei die Blattfeder (25) zwei elastische Strukturen aufweist, wenn sich die Bremssattelbaugruppe in einem Ruhezustand befindet, ein Abstand zwischen dem ersten Reibungselement (212) und dem zweiten Reibungselement (222) kleiner ist als eine freie Breite der Blattfeder (25),
wobei die freie Breite ein Abstand zwischen einer Außenseite eines anliegenden Abschnitts (254) einer der elastischen Strukturen und einer Außenseite eines anliegenden Abschnitts (254) der anderen der elastischen Strukturen, wenn sich die Blattfeder (25) in einem freien Zustand befindet, ist.

11. Bremssattelbaugruppe nach Anspruch 1, wobei der anliegende Abschnitt (254) von einer bogenförmigen Struktur ist und der anliegende Abschnitt (254) über eine gekrümmte Außenoberfläche der bogenförmigen Struktur an dem ersten Bremssattel (21) und/oder dem zweiten Bremssattel (22) anliegt.

12. Bremse, eine Bremssattelbaugruppe nach einem der Ansprüche 1 bis 11 aufweisend.

13. Fahrzeug, eine Bremse nach Anspruch 12 aufweisend.

## Revendications

1. Ensemble étrier de frein, comprenant un premier étrier de frein (21), un deuxième étrier de frein (22), un ensemble d'entraînement, et un ressort à lames (25), le premier étrier de frein (21) et le deuxième étrier de frein (22) agencés symétriquement de chaque côté d'un élément à freiner, et l'ensemble d'entraînement configuré pour permettre au premier étrier de frein (21) et/ou au deuxième étrier de frein (22) de venir en butée contre l'élément à freiner de façon à freiner l'élément à freiner,
dans lequel le ressort à lames (25) est agencé entre le premier étrier de frein (21) et le deuxième étrier de frein (22) et comprend une structure élastique, la structure élastique comprend une portion de flexion (251), une portion d'extension (252), une portion d'expansion vers l'extérieur (253), et une portion de butée (254) qui sont raccordées en séquence, la portion d'extension vers l'extérieur (253) s'étend de la portion d'extension (252) vers l'extérieur du ressort à lames (25), la portion de flexion (251) est fléchie vers l'intérieur, et la portion de butée (254) vient en butée sur le premier étrier de frein (21) et/ou le deuxième étrier de frein (22), et
dans lequel l'ensemble étrier de frein comprend en outre un élément de montage (23) agencé entre le premier étrier de frein (21) et le deuxième étrier de frein (22), le ressort à lames (25) étant raccordé de façon fixe à l'élément de montage (23),
**caractérisé en ce que** l'élément de montage (23) comprend un corps (231) et une portion de support (232), deux côtés du corps (231) s'étendant de façon substantiellement verticale pour former la portion de support (232) ; et
le ressort à lames (25) comprend en outre une structure de raccordement (255) et une portion de retenue (256) qui sont raccordées l'une à l'autre, la portion de retenue (256) est raccordée à la portion de flexion (251), et lorsque l'assemblage est achevé, la structure de raccordement (255) est raccordée de façon fixe au corps (231), et la portion de retenue (256) vient en butée contre un côté externe de la portion de support (232).

2. Ensemble étrier de frein selon la revendication 1, dans lequel la structure de raccordement (255) comprend une portion de raccordement (2551) et une portion d'arc (2552) qui sont raccordées l'une à l'autre, la portion d'arc (2552) est raccordée entre la portion de raccordement (2551) et la portion de retenue (256), et lorsque l'assemblage est achevé, la portion de raccordement (2551) est raccordée de façon fixe au corps (231), et la portion d'arc (2552) est située au-dessus d'un joint entre le corps (231) et la portion de support (232) pour éviter le joint.

3. Ensemble étrier de frein selon la revendication 1, dans lequel l'élément de montage (23) comprend un corps (231) et une portion de support (232), et le ressort à lames (25) est raccordé de façon fixe à la portion de support (232).

4. Ensemble étrier de frein selon la revendication 1, dans lequel la portion de retenue (256) est en raccordement homogène avec la portion de flexion (251).

5. Ensemble étrier de frein selon la revendication 1, dans lequel la portion de flexion (251) est une portion de flexion en forme d'arc.

6. Ensemble étrier de frein selon la revendication 1, dans lequel la largeur de la portion de flexion (251), de la portion d'extension (252), de la portion d'expansion vers l'extérieur (253), et de la portion de butée (254) diminue progressivement à partir de la portion de flexion (251) jusqu'à la portion de butée (254) .

7. Ensemble étrier de frein selon la revendication 1, dans lequel le premier étrier de frein (21) comprend un premier corps d'étrier (211) et un premier élément de frottement (212), le deuxième étrier de frein (22) comprend un deuxième corps d'étrier (221) et un deuxième élément de frottement (222), le premier élément de frottement (212) est situé sur un côté, à proximité de l'élément à freiner, du premier corps d'étrier (211), et est raccordé de façon mobile au premier corps d'étrier (211), et le deuxième élément de frottement (222) est situé sur un côté, à proximité de l'élément à freiner, du deuxième corps d'étrier (221), et est raccordé de façon mobile au deuxième corps d'étrier (221), et
l'ensemble d'entraînement est configuré pour permettre au premier élément de frottement (212) et/ou au deuxième élément de frottement (222) de se déplacer par rapport au premier corps d'étrier (211) et au deuxième corps d'étrier (221), de sorte que le premier élément de frottement (212) et/ou le deuxième élément de frottement (222) viennent en butée contre l'élément à freiner pour freiner l'élément à freiner.

8. Ensemble étrier de frein selon la revendication 7, comprenant en outre un élément de pression (24), dans lequel l'élément de montage (23) est raccordé au premier corps d'étrier (211) et/ou au deuxième corps d'étrier (221), l'élément de pression (24) est raccordé de façon fixe à l'élément de montage (23), et deux extrémités de l'élément de pression (24) sont respectivement pressées contre le premier élément de frottement (212) et le deuxième élément de frottement (222) pour empêcher le premier élément de frottement (212) et le deuxième élément de frottement (222) de trembler.

9. Ensemble étrier de frein selon la revendication 8, dans lequel l'élément de pression (24) est riveté à l'élément de montage (23), et un trou de rivetage dans l'élément de pression (24) est un trou formé spécialement.

10. Ensemble étrier de frein selon la revendication 7, dans lequel le ressort à lames (25) comprend deux structures élastiques, lorsque l'ensemble étrier de frein est dans un état non fonctionnel, une distance entre le premier élément de frottement (212) et le deuxième élément de frottement (222) est inférieure à une largeur libre du ressort à lames (25),
dans lequel la largeur libre est une distance entre un côté extérieur d'une portion de butée (254) de l'une des structures élastiques et un côté extérieur d'une portion de butée (254) de l'autre des structures élastiques lorsque le ressort à lames (25) est dans un état libre.

11. Ensemble étrier de frein selon la revendication 1, dans lequel la portion de butée (254) est d'une structure en forme d'arc, et la portion de butée (254) vient en butée sur le premier étrier de frein (21) et/ou le deuxième étrier de frein (22) à travers une surface incurvée externe de la structure en forme d'arc.

12. Frein, comprenant un ensemble étrier de frein selon l'une quelconque des revendications 1 à 11.

13. Véhicule, comprenant un frein selon la revendication 12.
